# FASCICULE DE BREVET EUROPEEN

(11) **EP 3 166 039 B1**
(45) Date de publication et mention de la délivrance du brevet: **22.07.2020**
(21) Numéro de dépôt: 16161517.4
(22) Date de dépôt: 22.03.2016
(51) Int. Cl.: G06F 21/57, G06F 21/81

(54) **DÉMARRAGE CONTRÔLÉ D'UN CIRCUIT ÉLECTRONIQUE**
KONTROLLIERTES STARTEN EINES ELEKTRONISCHEN SCHALTKREISES
CONTROLLED STARTING OF AN ELECTRONIC CIRCUIT

(30) Priorité: 03.11.2015 FR 1560511
(43) Date de publication de la demande: 10.05.2017
(73) Titulaire: PROTON WORLD INTERNATIONAL N.V., 1831 Diegem (BE)
(72) Inventeur: VAN NIEUWENHUYZE, Olivier, 1970 Wezembeek-Oppem (BE); RICARD, Christophe Henri, 13090 Aix en Provence (FR)
(74) Mandataire: Cabinet Beaumont

(56) Documents cités:
- EP-A2- 2 164 017
- US-A1- 2003 120 922
- US-A1- 2008 148 036
- US-A1- 2009 265 536

## Description

### Domaine

La présente description concerne de façon générale les dispositifs électroniques et, plus particulièrement, les dispositifs incluant un processeur et un élément de sécurité embarqué. La présente description s'applique plus particulièrement à contrôler l'authenticité de tout ou partie des instructions contenues dans le processeur au démarrage du dispositif.

### État de l'art antérieur

De nombreux dispositifs électroniques, par exemple des téléphones portables, des clés électroniques (dongles), etc. sont équipés de microprocesseurs de traitement de données et d'exécution d'applications diverses. Parmi ces applications, certaines sont désormais liées à des opérations nécessitant de préserver la sécurité des informations échangées, par exemple des opérations de paiement, de contrôle d'accès, etc.

Dans des dispositifs plus importants, par exemple des ordinateurs, des boîtiers de décodage vidéo (Set Top Box), etc., on trouve des modules de plateforme sécurisée (TPM - Trusted Platform Module) qui permettent de protéger le contenu des mémoires d'instructions et en particulier de vérifier qu'un code ou programme devant être exécuté n'ait pas été corrompu. De tels modules font défaut dans des dispositifs moins élaborés tels que, par exemple, les téléphones portables, les clés électroniques et les objets connectés (montre connectée, dongle d'accès, etc.).

Les dispositifs électroniques, même dépourvus de module de plateforme sécurisée, sont cependant de plus en plus souvent équipés d'éléments de sécurité embarqués qui sont en fait des circuits intégrés représentant les fonctions de sécurité des cartes à microcircuit (smartcard, SIM, etc.). Par exemple, ces éléments de sécurité contiennent l'application d'émulation d'une carte à microcircuit qui fournit le service sécuritaire d'authentification pour des opérations de paiement, de contrôle d'accès, etc.

Le document US 2009/265536 décrit un dispositif, système et procédé pour démarrage sécurisé d'une installation informatique.

Le document EP 2 164 017 décrit un mécanisme de récupération matériel automatique d'un ordinateur infecté.

Le document US 2008/148036 décrit un mécanisme de renforcement de conformité d'un ordinateur.

Le document US 2003/120922 décrit un système et un procédé d'authentification d'un dispositif.

### Résumé

Il serait souhaitable de pouvoir sécuriser le démarrage d'un dispositif électronique pour contrôler que le code ou les données qu'il contient sont authentiques ou non corrompus.

Un mode de réalisation propose une solution palliant tout ou partie des inconvénients des techniques connues de démarrage de microprocesseur dans un dispositif électronique.

Un mode de réalisation propose de protéger un élément de sécurité embarqué associé à un microprocesseur dans un dispositif électronique.

Ainsi, un mode de réalisation prévoit un procédé de vérification de l'authenticité du contenu d'une mémoire non volatile d'un dispositif électronique comprenant un microcontrôleur et un élément de sécurité embarqué, comportant les étapes suivantes :
démarrer le microcontrôleur avec des instructions stockées dans une première zone de mémoire non reprogrammable associée au microcontrôleur ;
démarrer l'élément de sécurité ;
exécuter, par l'élément de sécurité, une vérification de signature de contenu d'une deuxième zone de mémoire non volatile reprogrammable associée au microcontrôleur ; et
interrompre, par un commutateur (K) d'interruption de l'alimentation sur commande de l'élément de sécurité, l'alimentation du microcontrôleur si la signature n'est pas vérifiée.

Selon un mode de réalisation, si la signature est vérifiée, l'élément de sécurité envoie un message de validation du contenu de la deuxième zone au microcontrôleur.

Selon un mode de réalisation, le microcontrôleur attend une réponse de l'élément de sécurité pour exécuter des instructions contenues dans la deuxième zone.

Selon un mode de réalisation, en cas de mise à jour authentique du contenu de la deuxième zone, la signature stockée dans l'élément de sécurité est modifiée en conséquence.

Selon un mode de réalisation, au démarrage de l'élément de sécurité, ce dernier surveille l'arrivée d'une requête provenant du microcontrôleur pour, au cas où cette requête n'arrive pas au bout d'un temps donné, provoquer l'interruption de l'alimentation du microcontrôleur.

Un mode de réalisation prévoit un dispositif électronique comportant :
un microcontrôleur ;
un élément de sécurité embarqué adapté à vérifier une signature de contenu d'une zone de mémoire non volatile reprogrammable associée au microcontrôleur ; et
un commutateur d'interruption de l'alimentation du microcontrôleur sur commande de l'élément de sécurité embarqué si la signature de contenu d'une zone de mémoire non volatile reprogrammable associée au microcontrôleur n'est pas vérifiée par l'élément de sécurité embarqué.

Selon un mode de réalisation, un circuit intermédiaire est intercalé entre le microcontrôleur et l'élément de sécurité.

Selon un mode de réalisation, le microcontrôleur et l'élément de sécurité sont adaptés à la mise en oeuvre du procédé ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un mode de réalisation d'un dispositif électronique équipé d'un microcontrôleur et d'un élément de sécurité embarqué ;
la figure 2 est une représentation schématique illustrant un mode de réalisation d'une séquence de démarrage du microcontrôleur du dispositif électronique de la figure 1 ; et
la figure 3 est une représentation schématique illustrant un autre mode de réalisation d'une séquence de démarrage du microcontrôleur du dispositif électronique de la figure 1.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, les applications du dispositif électronique n'ont pas été détaillées, les modes de réalisation décrits étant compatibles avec les applications usuelles de tels dispositifs. De plus, les protocoles d'échanges de signaux entre les différents éléments du dispositif électronique n'ont pas non plus été détaillés, les modes de réalisation décrits étant, là encore, compatibles avec les protocoles habituellement utilisés. Dans la description qui suit, lorsqu'on fait référence aux termes approximativement, environ et, de l'ordre de, cela signifie à 10% près, de préférence à 5% près.

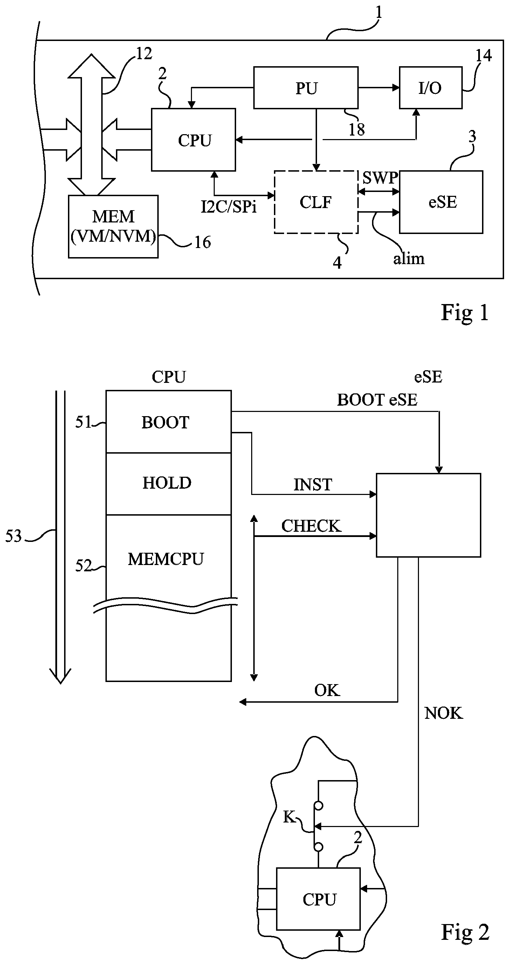

La figure 1 représente, de façon très schématique et sous forme de blocs, un exemple de dispositif électronique 1 du type auquel s'appliquent les modes de réalisation qui vont être décrits.

Le dispositif 1, par exemple un téléphone portable, une clé électronique, etc., comporte un microcontrôleur 2 (CPU - Central Processing Unit) chargé de contrôler tout ou partie des programmes et applications exécutés dans le dispositif. Le microcontrôleur 2 communique, par l'intermédiaire d'un ou plusieurs bus 12 d'adresses, de données, et de commandes, avec différents circuits électroniques et périphériques (non représentés) du dispositif 1, par exemple des circuits de contrôle d'un écran, d'un clavier, etc., ainsi qu'avec diverses interfaces d'entrée-sortie 14 (I/O) filaires ou sans fil (par exemple Bluetooth). Le microcontrôleur 2 intègre généralement des mémoires volatiles et non volatiles et exploite également le contenu de mémoires similaires 16 (MEM (VM/NVM)) du dispositif 1. Le microcontrôleur 2 et divers circuits du dispositif 1 sont alimentés par une unité de fourniture d'énergie 18 (PU - Power Unit). Par exemple, l'unité 18 est une batterie, le cas échéant associée à un régulateur de tension.

Dans les applications visées par la présente description, le dispositif 1 comporte en outre un élément de sécurité embarqué 3 (par exemple de type eSE - embedded Secure Element ou eUICC - embedded Universal Integrated Circuit Card) qui inclut un microprocesseur sécurisé. L'élément 3 est destiné à contenir les services ou applications sécurisés du dispositif électronique, par exemple, des applications de paiement, de contrôle d'accès, etc.

Le cas échéant, un élément ou circuit intermédiaire 4, par exemple un contrôleur de communication en champ proche 4 (NFC - Near Field Communication), également appelé tête sans contact (CLF - Contactless Front end), un contrôleur Bluetooth, etc., équipe le dispositif 1. Cet élément 4 (illustré en pointillés en figure 1) est susceptible d'être utilisé par le microcontrôleur 2, par exemple par des liaisons de type bus bifilaire (I2C ou SPI) et, par l'élément 3, par une liaison de type bus unifilaire (SWP - Single Wire Protocol).

Selon le niveau de tension supporté par l'élément de sécurité 3, celui-ci est soit alimenté par l'unité 18, soit comme cela est représenté en figure 1 par l'élément 4 qui est lui alimenté par l'unité 18. Par exemple, on peut considérer le cas d'un microcontrôleur 2 et d'un contrôleur de communication sans contact 4, alimentés sous une tension de l'ordre de 3 volts par l'unité 18 et d'un élément 3 alimenté sous une tension de l'ordre de 1,8 volt (alim) par le contrôleur 4. Le besoin d'une alimentation par le contrôleur NFC 4 peut provenir des niveaux exploités par les protocoles de communication entre le contrôleur et l'élément de sécurité 3.

On prévoit de tirer profit de la présence de l'élément de sécurité embarqué 3 pour vérifier l'authenticité du contenu (données, instructions, etc.) de tout ou partie des mémoires associées au microcontrôleur 2.

La figure 2 est une représentation schématique illustrant un mode de réalisation d'une séquence de démarrage du microcontrôleur 2 du dispositif électronique 1 de la figure 1.

Les risques inhérents au démarrage du microcontrôleur 2 en termes de sécurité des données sont qu'en cas de piratage du code (programme) du microcontrôleur, il y a un risque que les données de l'élément de sécurité embarqué puissent être piratées. Ce risque se produit au démarrage, dit à froid, qui suit une mise sous tension (généralement appelé "cold boot") car l'ensemble des mécanismes de contrôle d'accès aux différents circuits n'ont pas encore été initialisés et notamment, la configuration des mémoires selon des zones libres et des zones réservées. Le problème est moindre dans le cas d'une réinitialisation "à chaud" du dispositif, c'est-à-dire sans interruption de l'alimentation du microcontrôleur, car ces mécanismes de configuration des zones des mémoires ne sont généralement pas touchés. Toutefois, on peut également mettre en oeuvre la réalisation décrite en cas d'effacement partiel ou total de la mémoire lors d'une réinitialisation.

Lors d'un démarrage (mise sous tension des circuits électroniques du dispositif) ou d'une réinitialisation avec coupure de l'alimentation, le microcontrôleur 2 commence par accéder à une zone 51 (BOOT) figée de sa mémoire non volatile contenant un code (un programme de mise en route). Cette zone 51 est généralement une zone de mémoire morte, c'est-à-dire non volatile et non reprogrammable (parfois dite "immutable"). Elle est donc fixée à la fabrication et ne risque pas d'être modifiée par un éventuel pirate. En fait, la ou les zones 52 (MEMCPU) de mémoire qu'il convient de protéger sont des zones de mémoire non volatile qui vont être exploitées par le microcontrôleur 2 lorsque des applications voudront accéder à l'élément 3. De telles zones 52 contiennent généralement du code (des instructions) et des données, qui sont reprogrammables en fonction des applications. Si un pirate parvient à stocker un code d'attaque dans ces zones, il risque de pouvoir avoir accès à l'élément de sécurité 3.

Le code 51 de mise en route exécuté par le microcontrôleur contient une instruction de démarrage de l'élément de sécurité 3 (eSE) ainsi que, ultérieurement dans le séquencement du processus d'initialisation (illustré par une flèche 53), une instruction INST de lancement d'un processus de vérification du contenu de la zone 52 par l'élément 3. Une fois que cette instruction INST est communiquée par le microcontrôleur 2 à l'élément 3, le microcontrôleur 2 se met en attente (HOLD) d'une réponse de l'élément de sécurité 3. Tant qu'il ne reçoit pas cette réponse, il ne poursuit pas l'exécution du code qu'il contient.

La vérification CHECK opérée par l'élément 3 consiste à lire tout ou partie de la zone 52 et à exécuter un mécanisme de vérification d'authenticité. Par exemple, ce mécanisme est un calcul de signature à partir du code et des données contenus dans la zone 52, et de vérification de cette signature par rapport à une signature de référence stockée dans l'élément 3. Dans ce cas, en cas de modification autorisée du contenu de la zone 52, on met à jour la signature de référence stockée dans l'élément 3 afin de permettre les vérifications d'authenticité ultérieures.

Si l'élément 3 valide l'authenticité du contenu de la zone 52, il répond (OK) au microcontrôleur 2. Celui-ci peut alors sortir de son mode d'attente et exécuter le reste de l'initialisation à partir du contenu de la zone 52.

Par contre, si l'élément 3 ne valide pas (NOK) le contenu de la zone 52, il provoque, par l'intermédiaire d'un commutateur K intercalé sur la ligne d'alimentation du microcontrôleur 2, une interruption de cette alimentation. Cela force alors le microcontrôleur à redémarrer et les étapes décrites ci-dessus sont réitérées. Si l'erreur provenait d'un dysfonctionnement transitoire, l'exécution suivante valide le démarrage. Par contre, si le code contenu dans la zone 52 pose effectivement problème (que ce soit suite à une attaque ou suite à un problème de la mémoire), le microcontrôleur 2 va redémarrer successivement par exemple jusqu'à épuisement de la batterie 18 ou sans fin tant que le dispositif 1 est branché, mais sans jamais passer la phase de démarrage BOOT.

De préférence, au démarrage de l'élément 3 (BOOT eSE), ce dernier surveille l'arrivée d'une requête (de l'instruction INST) provenant du microcontrôleur 2. Au cas où cette requête n'arrive pas au bout d'un certain temps, fixé par rapport au temps habituel entre le démarrage et l'arrivée de la requête INST (par exemple de l'ordre de la centaine de millisecondes), l'élément 3 provoque l'interruption de l'alimentation du microcontrôleur 2. Cela procure une sécurité supplémentaire en cas de perturbation du programme de démarrage BOOT du microcontrôleur.

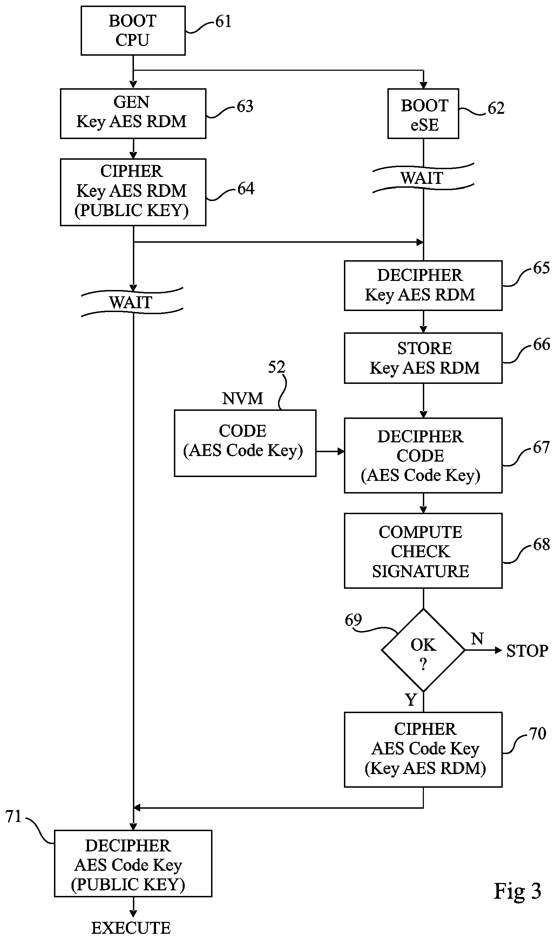

La figure 3 est une représentation schématique illustrant un autre mode de réalisation d'une séquence de démarrage du microcontrôleur du dispositif électronique de la figure 1.

Selon ce mode de réalisation, tout se fait par échange de messages entre le microcontrôleur 2 et l'élément de sécurité 3, sans nécessairement agir sur (interrompre) l'alimentation du microcontrôleur.

Le démarrage du microcontrôleur 2 et de l'élément de sécurité 3 est provoqué de la même façon que dans le mode de réalisation précédent, c'est-à-dire qu'au démarrage (bloc 61, BOOT CPU) du microcontrôleur 2, celui-ci provoque le démarrage (bloc 62, BOOT eSE) de l'élément de sécurité 3. Une fois démarré, l'élément 3 se met en attente d'instruction (WAIT).

Par ailleurs, la vérification de contenu de la zone 52 ou des zones de mémoire non volatile (NVM) contenant du code à vérifier s'effectue également, de préférence, par une vérification de signature par l'élément 3.

Selon le mode de réalisation de la figure 3, le code et les données fixes, stockés en mémoire non volatile 52 et constituant les données d'initialisation du microcontrôleur 2 après son démarrage, sont chiffrés. Le chiffrement utilisé est par exemple un chiffrement symétrique de type AES. Cependant, la clé de chiffrement n'est pas stockée dans le microcontrôleur 2 mais est stockée dans l'élément de sécurité 3.

Une fois que le microcontrôleur 2 a démarré (fin du bloc 61) et qu'il a donné instruction à l'élément 3 de démarrer, il génère une clé (bloc 63, GEN KeyAESRDM), de préférence un nombre aléatoire de la taille de l'AES utilisé pour le chiffrement du code.

Le microcontrôleur 2 transmet alors cette clé KeyAESRDM à l'élément de sécurité. De préférence, cette transmission s'effectue par un mécanisme à clé publique, le microcontrôleur chiffrant la clé KeyAESRDM avec la clé publique PUBLIC KEY de l'algorithme (bloc 64, CIPHER KeyAESRDM (PUBLIC KEY)). De préférence, le microcontrôleur 2 ne stocke pas le nombre aléatoire KeyAESRDM en mémoire non volatile. En effet, il lui suffit de stocker ce nombre en mémoire volatile, ce qui réduit les risques d'attaque. Une fois la clé KeyAESRDM transmise, le microcontrôleur se met en attente (WAIT).

L'élément 3 déchiffre la clé KeyAESRDM à l'aide de la clé publique du mécanisme à clé publique (bloc 65, DECIPHER KeyAESRDM)) et la stocke (bloc 66, STORE KeyAESRDM).

L'élément 3 déchiffre alors (bloc 67, DECIPHER CODE (AESCodeKey) le code contenu dans la zone 52 de la mémoire non volatile du microcontrôleur 2 (ou associée à celui-ci) et calcule et vérifie (bloc 68, COMPUTE/CHECK SIGNATURE) la signature du code.

Si la signature est incorrecte (sortie N du bloc 69, OK ?), l'élément 3 ne répond pas au microcontrôleur 2 et le fonctionnement de ce dernier est bloqué (STOP).

Si la signature est correcte (sortie Y du bloc 69), l'élément 3 chiffre la clé AESCodeKey avec la clé KeyAESRDM (bloc 70, CIPHER AESCodeKey (KeyAESRDM)) et l'envoie au microcontrôleur 2. Ce dernier déchiffre la clé AESCodeKey (bloc 71, DECIPHER AESCodeKey (PUBLIC KEY)) avec la clé KeyAESRDM.

Le microcontrôleur 2 utilise alors cette clé AESCodeKey pour déchiffrer le code contenu dans la zone 52 et l'exécuter (EXECUTE). Toutefois, la clé AESCodeKey n'est pas stockée en mémoire non volatile par le microcontrôleur 2. Ainsi, côté microcontrôleur 2, le nombre KeyAESRDM et la clé AESCodeKey ne sont stockés que dans des éléments de mémorisation volatile (mémoire RAM, registres ou autres).

Selon une variante de réalisation, la clé AESCodeKey est générée par l'élément de sécurité 3 à chaque changement de la signature du code contenu dans la zone 52, c'est-à-dire à chaque modification de ce code.

Selon une autre variante, lors de la fabrication des circuits (du microcontrôleur 2 et de l'élément de sécurité 3), le code de chiffrement de la mémoire 52 du microcontrôleur est généré par l'élément de sécurité 3. Cela signifie que le code AESCodeKey varie d'un dispositif 1 à un autre.

De préférence, la clé asymétrique (paire de clés publique et privée) est unique par paire de composant microcontrôleur 2 / élément de sécurité 3.

On notera que les deux modes de réalisation et leurs variantes respectives peuvent être combinés. Par exemple, en cas d'échec d'authentification d'après le second mode de réalisation, (sortie N du bloc 69, figure 3), on peut prévoir que l'élément de sécurité interrompe l'alimentation du microcontrôleur conformément au mode de réalisation décrit en relation avec la figure 2.

Divers modes de réalisation ont été décrits. Diverses modifications apparaîtront à l'homme de l'art. En particulier, le choix des zones des mémoires dont le contenu doit être vérifié dépend de l'application et peut varier. De plus, le choix des processus de chiffrement d'échange des informations entre l'élément de sécurité et le microcontrôleur dépend également des applications. En outre, la mise en oeuvre pratique des modes de réalisation qui ont été décrits est à la portée de l'homme du métier en utilisant les indications fonctionnelles données ci-dessus.

## Revendications

1. Procédé de vérification de l'authenticité du contenu d'une mémoire non volatile d'un dispositif électronique (1) comprenant un microcontrôleur (2) et un élément de sécurité embarqué (3), comportant les étapes suivantes :
démarrer le microcontrôleur avec des instructions stockées dans une première zone (51) de mémoire non reprogrammable associée au microcontrôleur ;
démarrer l'élément de sécurité (3) ;
exécuter, par l'élément de sécurité, une vérification de signature de contenu d'une deuxième zone (52) de mémoire non volatile reprogrammable associée au microcontrôleur ; et
interrompre, par un commutateur (K) d'interruption de l'alimentation sur commande de l'élément de sécurité, l'alimentation du microcontrôleur si la signature n'est pas vérifiée.

2. Procédé selon la revendication 1, dans lequel, si la signature est vérifiée, l'élément de sécurité (3) envoie un message (OK) de validation du contenu de la deuxième zone (52) au microcontrôleur (2).

3. Procédé selon la revendication 1 ou 2, dans lequel le microcontrôleur (2) attend une réponse de l'élément de sécurité (3) pour exécuter des instructions contenues dans la deuxième zone (52).

4. Procédé selon l'une quelconque des revendications 1 à 3, dans lequel, en cas de mise à jour authentique du contenu de la deuxième zone (52), la signature stockée dans l'élément de sécurité (3) est modifiée en conséquence.

5. Procédé selon l'une quelconque des revendications 1 à 4, dans lequel au démarrage de l'élément de sécurité (3), ce dernier surveille l'arrivée d'une requête provenant du microcontrôleur (2) pour, au cas où cette requête n'arrive pas au bout d'un temps donné, provoquer l'interruption de l'alimentation du microcontrôleur.

6. Dispositif électronique comportant :
un microcontrôleur (2) ;
un élément de sécurité embarqué (3) adapté à vérifier une signature de contenu d'une zone (52) de mémoire non volatile reprogrammable associée au microcontrôleur ; et
un commutateur (K) d'interruption de l'alimentation du microcontrôleur sur commande de l'élément de sécurité embarqué si la signature de contenu d'une zone (52) de mémoire non volatile reprogrammable associée au microcontrôleur n'est pas vérifiée par l'élément de sécurité embarqué.

7. Dispositif selon la revendication 6, dans lequel un circuit intermédiaire (4) est intercalé entre le microcontrôleur (2) et l'élément de sécurité (3).

8. Dispositif selon la revendication 6 ou 7, dans lequel le microcontrôleur (2) et l'élément de sécurité (3) sont adaptés à la mise en oeuvre du procédé selon l'une quelconque des revendications 1 à 5.

## Patentansprüche

1. Verfahren zum Prüfen der Authentizität des Inhalts eines nichtflüchtigen Speichers einer elektronischen Vorrichtung (1), die einen Mikrocontroller (2) und ein eingebettetes Sicherheitselement (3) aufweist, mit den folgenden Schritten
Starten des Mikrocontrollers mit Befehlen, die in einem ersten nicht reprogrammierbaren Speicherbereich (51), der mit dem Mikrocontroller assoziiert ist, gespeichert sind;
Starten des Sicherheitselement (3);
Ausführen, mit dem Sicherheitselement, einer Signaturprüfung des Inhalts eines zweiten reprogrammierbaren nichtflüchtigen Speicherbereichs (52), der mit dem Mikrocontroller assoziiert ist; und
Unterbrechen der Stromversorgung des Mikrocontrollers, mit einem Schalter (K) zur Unterbrechung der Stromversorgung auf eine Anforderung des eingebetteten Sicherheitselements hin, wenn die Signatur nicht verifiziert wird.

2. Verfahren nach Anspruch 1, wobei, wenn die Signatur verifiziert wird, das Sicherheitselement (3) eine Nachricht (OK) zur Validierung des Inhalts des zweiten Bereichs (52) an den Mikrocontroller (2) sendet.

3. Verfahren nach Anspruch 1 oder 2, wobei der Mikrocontroller (2) auf eine Antwort vom Sicherheitselement (3) wartet, um Anweisungen auszuführen, die im zweiten Bereich (52) enthalten sind.

4. Das Verfahren nach einem der Ansprüche 1 bis 3, wobei im Falle einer authentischen Aktualisierung des Inhalts des zweiten Bereichs (52) die in dem Sicherheitselement (3) gespeicherte Signatur entsprechend geändert wird.

5. Das Verfahren nach einem der Ansprüche 1 bis 4, wobei beim Start des Sicherheitselement (3) dieses das Eingehen einer vom Mikrocontroller (2) ausgehenden Anforderung überwacht, um für den Fall, dass diese Anforderung nach einer bestimmten Zeit nicht ankommt, die Unterbrechung der Stromversorgung des Mikrocontrollers zu bewirken.

6. Eine elektronische Vorrichtung, die Folgendes aufweist:
einen Mikrocontroller (2);
ein eingebettetes Sicherheitselement (3), das für eine Verifizierung der Signatur des Inhalts eines Bereichs (52) eines nichtflüchtigen reprogrammierbaren Speichers, der mit dem Mikrocontroller assoziiert ist, geeignet ist; und
einen Schalter (K) zur Unterbrechung der Stromversorgung des Mikrocontrollers auf eine Anforderung des eingebetteten Sicherheitselements hin, wenn die Signatur des Inhalts des Bereichs (52) des nichtflüchtigen reprogrammierbaren Speichers, der mit dem Mikrocontroller assoziiert ist nicht durch das eingebettete Sicherheitselement verifiziert wurde.

7. Vorrichtung nach Anspruch 6, wobei eine Zwischenschaltung (4) zwischen den Mikrocontroller (2) und das Sicherheitselement (3) geschaltet ist.

8. Vorrichtung nach Anspruch 6 oder 7, wobei der Mikrocontroller (2) und das Sicherheitselement (3) in der Lage sind, das Verfahren nach einem der Ansprüche 1 bis 5 zu implementieren.

## Claims

1. A method of checking the authenticity of the content of a non-volatile memory of an electronic device (1) comprising a microcontroller (2) and an embedded secure element (3), comprising the steps of:
starting the microcontroller with instructions stored in a first non-reprogrammable memory area (51) associated with the microcontroller;
starting the secure element (3);
executing, with the secure element, a signature verification on the content of a second reprogrammable non-volatile memory area (52) associated with the microcontroller; and
interrupting, with a switch (K) for interrupting the power supply on request of the secure element, the power supply of the microcontroller if the signature is not verified.

2. The method of claim 1, wherein, if the signature is verified, the secure element (3) sends a message (OK) of validation of the content of the second area (52) to the microcontroller (2) .

3. The method of claim 1 or 2, wherein the microcontroller (2) waits for a response from the secure element (3) to execute instructions contained in the second area (52).

4. The method of any of claims 1 to 3, wherein in case of an authentic update of the content of the second area (52), the signature stored in the secure element (3) is accordingly modified.

5. The method of any of claims 1 to 4, wherein at the starting of the secure element (3), the latter monitors the arrival of a request originating from the microcontroller (2) so as to, in the case where this request does not arrive after of a given time, cause the interruption of the microcontroller power supply.

6. An electronic device comprising:
a microcontroller (2);
an embedded secure element (3) adapted to verify signature on the content of a reprogrammable non-volatile memory area (52) associated with the microcontroller; and
a switch (K) for interrupting the microcontroller power supply on request of the embedded secure element if the signature on the content of a reprogrammable non-volatile memory area (52) associated with the microcontroller is not verified by the embedded secure element.

7. The device of claim 6, wherein an intermediate circuit (4) is interposed between the microcontroller (2) and the secure element (3).

8. The device of claim 6 or 7, wherein the microcontroller (2) and the secure element (3) are capable of implementing the method of any of claims 1 to 5.
